# EUROPEAN PATENT SPECIFICATION

(11) **EP 1 438 139 B1**
(45) Date of publication and mention of the grant of the patent: **22.06.2011**
(21) Application number: 02751917.2
(22) Date of filing: 18.08.2002
(51) Int. Cl.: B03C 1/00, C07F 7/16

(54) **METHOD FOR REMOVING IMPURITIES FROM SILICON-CONTAINING RESIDUES**
VERFAHREN ZUM ENTFERNEN VON VERUNREINIGUNGEN VON SILIZIUM ENTHALTENDEN RÜCKSTÄNDEN
PROCEDE DE SUPPRESSION D'IMPURETES A PARTIR DE RESIDUS CONTENANT DU SILICIUM

(30) Priority: 27.08.2001 NO 20014148
(43) Date of publication of application: 21.07.2004
(73) Proprietor: Elkem AS, 0377 Oslo (NO)
(72) Inventor: RONG, Harry, Morten, N-7089 Heimdal (NO); SORHEIM, Haavard, N-7052 Trondheim (NO); OYE, Harald, Arnljot, N-7049 Trondheim (NO)
(74) Representative: Rees, David Christopher
(86) International application number: PCT/NO2002/000279
(87) International publication number: WO 2003/018207

(56) References cited:
- US-A- 4 307 242
- US-A- 5 147 527
- US-B1- 6 264 843
- US-B1- 6 433 205

## Description

### Technical Field

The present invention relates to a method for removing impurities from residual silicon powder obtained in the production of organochlorosilanes and chlorosilanes.

### Background Art

The commercial method for manufacturing organohalosilanes is well known and is described in US patent No. 2,380,995. This patent discloses the direct reaction of an organohalide such as methylchloride with silicon particles to produce organochlorosilane. A copper catalyst is mixed with the silicon particles to form a reaction mass, also called contact mass. The reaction is normally carried out in a fluidized bed type reactor. A part of the silicon particles are carried out of the reactor with the organochlorosilane gases produced and is recovered in cyclones or filters. The residue recovered from the cyclone or the filter has a high content of unreacted, elemental silicon contaminated by compounds of copper, iron, chloride and others.

Further from time to time the reactor has to be stopped, the used reaction mass removed, whereafter fresh reaction mass is added. The used reaction mass still contains an appreciable amount of elemental silicon, but is contaminated with compounds of a number of elements, particularly copper, carbon, calcium, iron, aluminum and chlorine, as well as oxide and carbide particles from slag. These contaminents accumulate in the reactor during the process and after a certain period of time the used reaction mass has to be removed from the reactor as a residue. This used reaction mass or residue has conventionally been deposited or has been treated and upgraded for the use in other processes.

The commercial process for producing trichlorosilane (TCS) is also well known and is normally carried out in a fluidized bed reactor or stirred bed reactor by reaction of silicon particles with HCl gas. This process is generally carried out at a temperature between 250°C and 550°C. Also in this process it is obtained a residue containing an appreciable amount of elemental silicon, but which is contaminated by iron- aluminum- and calcium compounds as well as oxide and carbide particles from slag. This residue therefore cannot be recycled to the reactor. Further, in the TCS process some of the boron in the silicon particles accumulates in the residue, and since the main use of TCS is to produce electronic grade silicon requiring a very low content of boron, recycling of the residue would give a TCS having a too high boron content.

TCS can also be produced by reacting silicon particles with silicon tetrachloride and hydrogen at about 500°C in a fluidized bed reactor. Also in this process silicon-containing residues are produced.

Silicon tetrachloride together with TCS is produced in a so-called solid bed reactor at about 1000°C where silicon lumps are reacted with HCl gas. Residues having a similar chemical composition but larger particle size is produced in this process.

From US patent No. 4,307,242 it is known a process for removing impurities from contact mass from the direct reaction for production of organohalosilane. According to the process of US patent No. 4,307,242 the particle size distribution of the used contact mass is analyzed, whereafter the analyzed contact mass is classified into a relative pure fraction and a relative impure fraction. The relative pure fraction is the coarse fraction and the relative impure fraction is the fine fraction. The coarse fraction is recycled to the organohalosilane reactor. Due to the very small particle size of the used contact mass, from about 5 µm to about 500 µm, the classification process is difficult and additional equipment such as filters are needed.

It is an object of the present invention to provide a simple, low cost process for removing impurities from residues from the process for producing organochlorosilanes and residues from the process of producing chlorosilanes where the residues are separated into a relative pure fraction and a relation impure fraction and where the relative pure fraction can be recycled to the organochlorosilane reactor or the chlorosilane reactor.

The present invention thus relates to a method for removing impurities from elemental silicon-containing residues from the processes of producing organochlorosilane and chlorosilane, which method is characterized in that the residues are subjected to magnetic separation to provide a relative pure non-magnetic fraction having an increased silicon content and a relatively impure magnetic fraction having a lower silicon content than the non-magnetic fraction.

The magnetic separation is preferably carried out using a high intensity, high gradient magnetic separation apparatus. The magnetic field strength needed to obtain the necessary separation varies with the source and the particle size of the residue. Good results have been obtained by using a magnetic field strength of about 10000 Gauss and excellent results have been obtained by using a magnetic field strength of 17000 Gauss. It may, however, be obtained satisfactory results using a magnetic field strength below 10000 Gauss. Thus the necessary magnetic field strength for a certain residue must be determined for each particular residue.

Best results are obtained by using a short belt conveyor which has a magnet as its head pulley. The particulate residue is the feed onto the moving conveyor belt via a feed hopper and a vibration feeder. As the material is conveyed over the magnet, ferromagnetic and paramagnetic particles adhere to the conveyor belt whilst non-magnetic particles fall freely off the end of the conveyor.

The non-magnetic fraction having a high silicon content is preferably recycled to the organochlorosilane reactor or to the chlorosilane reactor. Since the residues are very hygroscopic, it is preferred to carry out the magnetic separation in an atmosphere which avoid moisture and oxidation of the residue and of the produced non-magnetic fraction. This is preferably done by carrying out the magnetic separation under an inert atmosphere.

It has surprisingly been found that even if the silicon-containing residues were believed to be virtually non-magnetic, it is possible to use magnetic separation to remove impurities from the silicon particles in the residue. Thus it has been found that for a used contact mass for production of TCS which contained 17.8 % by weight of elemental silicon it was obtained a non-magnetic fraction containing 40.9 % by weight elemental silicon, while the magnetic fraction contained only 8.6 % by weight of elemental silicon.

### Short description of the drawing

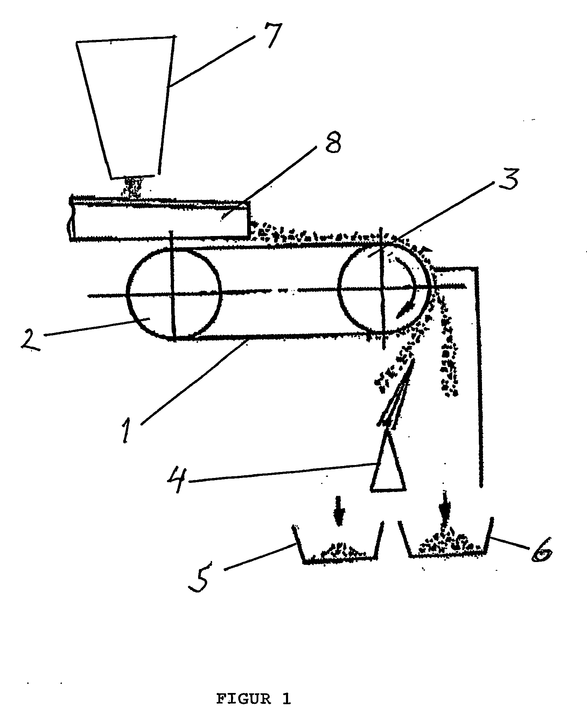

Figure 1 shows a magnetic separator which can be used by the method of the present invention.

### Detailed description of the invention

The examples set out below were carried out using a magnetic separation apparatus shown in figure 1.

In figure 1 there is shown a magnetic separator comprising a conveyor belt 1 running over two pulleys 2 and 3. The pulley 3 is a permanent magnet while the pully 2 is an ordinary conveyor pulley. Below the conveyor belt there is arranged a splitter blade 4 to split the material into a magnetic fraction and a non-magnetic fraction. The two fractions are collected in hoppers 5, 6. The material to be treated is placed in a hopper 7 above the conveyor belt 1 and a vibration feeder 8 or the like is arranged to feed material from the hopper 7 to the conveyor belt 1.

The specific magnetic separator used in the examples below was a PERMROLL^{®} Laboratory Separator delivered by Ore Sorters (North America) Inc., Colorado, USA. The thickness of the conveyor belt was 0.25 mm which gave a magnetic field strength of about 17000 Gauss.

### EXAMPLE 1

297 grams of a reactor residue from a TCS reactor having the chemical analysis set out in Table 1 was treated in the magnetic separator apparatus described above in connection with Figure 1.

### TABLE 1

### Reactor residue from TCS

| **Element** | **% by weight** |
|---|---|
| Si total | 66.8 |
| Si elemental | 17.8 |
| Fe | 2.45 |
| Al | 3.99 |
| Ca | 2.48 |
| Ti | 0.11 |
| Mn | 0.069 |
| Cu | 0.048 |
| K | 0.11 |
| Mg | 0.16 |
| P | 0.144 |
| Ba | 0.13 |
| Sr | 0.064 |
| Zr | 0.018 |
| Cl | 1.54 |
| B | 130 ppm |

It was obtained a non-magnetic fraction of 158 grams and a magnetic fraction of 139 grams. The chemical composition of the non-magnetic fraction and of the magnetic fraction are set out in Table 2.

**TABLE 2**

| **Element** | **Non-magnetic % by weight** | **Magnetic % by weight** |
|---|---|---|
| Si total | 72.6 | 43.2 |
| Si elemental | 40.9 | 8.6 |
| Fe | 0.68 | 7.09 |
| Al | 3.46 | 6.10 |
| Ca | 3.09 | 2.33 |
| Ti | 0.02 | 0.11 |
| Mn | 0.02 | 0.08 |
| Cu | 0.01 | 0.02 |
| K | 0.09 | 0.07 |
| Mg | 0.20 | 0.41 |
| P | 0.058 | 0.117 |
| Ba | 0.06 | 0.13 |
| Sr | 0.03 | 0.02 |
| Zr | >0.005 | 0.01 |
| Cl | 0.86 | 7.47 |
| B | 49 ppm | 193 ppm |

As can be seen by comparing the analysis in Table 1 with the analysis of the two fractions in Table 2, the amount of elemental silicon in the non-magnetic fraction is increased substantially compared to the untreated reactor residue. It can also be seen that the amount of elemental silicon in the magnetic fraction is low. Further it can be seen that the iron content in the non-magnetic fraction is very low and that most of the iron in the untreated reactor residue is separated into the magnetic fraction. It can also be seen that there is a reduction in the amount of aluminum and a number of the trace elements. The reduction in the content of chlorine in the non-magnetic fraction compared to the chlorine content in the untreated reactor residue is due to the fact that iron, aluminum, calcium and most of the trace elements are present in the reactor residue as chlorides.

Finally it can be seen that the non-magnetic fraction is low in boron and phosphorous as most of the boron and phosphorous contained in the reactor residue are found in the magnetic fraction.

The non-magnetic fraction obtained thus has such a composition that it can be recycled to the TCS reactor, thus increasing the yield of the silicon in the reactor.

### EXAMPLE 2

844 grams of a reactor residue from a reactor for production organochlorosilane by the direct reaction having the chemical analysis set out in Table 3 was treated in the magnetic separator described above in connection with Figure 1. It can be seen from Table 3 that the reactor residue was little reacted as the content of elemental silicon is very high.

**TABLE 3**

| **Element** | |
|---|---|
| % Si total | 99.2 |
| % Si elemental | 88.9 |
| % Al | 0.2 |
| % Ca | 0.03 |
| % Fe | 0.3 |
| ppmw Mg | <10 |
| ppmw Zr | 43 |
| ppmw Sr | <10 |
| ppmw Na | <10 |
| ppmw Pb | 16 |
| ppmw Mg | <10 |
| ppmw As | <10 |
| ppmw Zn | 2475 |
| % Cu | 5.8 |
| ppmw Ni | 27 |
| ppmw Mn | 27 |
| ppmw Cr | 42 |
| ppmw V | <10 |
| ppmw Ba | 32 |
| ppmw Ti | 225 |
| ppmw Sb | <10 |
| ppmw Sn | 327 |

It was obtained a non-magnetic fraction of 772 grams and a magnetic fraction of 72.2 grams. The chemical composition of the non-magnetic fraction and of the magnetic fraction is shown in Table 4.

**TABLE 4**

| **Element** | **Magnetic** | **Non-magnetic** |
|---|---|---|
| % Si total | 98.1 | 99.2 |
| % Si elemental | 70.9 | 90.0 |
| % Al | 0.4 | 0.2 |
| % Ca | 0.08 | 0.02 |
| % Fe | 1.0 | 0.2 |
| ppmw Mg | <10 | <10 |
| ppmw Zr | 90 | 39 |
| ppmw Sr | <10 | <10 |
| ppmw Na | <10 | <10 |
| ppmw Pb | 27 | 15 |
| ppmw Bi | <10 | <10 |
| ppmw As | <10 | <10 |
| ppmw Zn | 4600 | 2139 |
| % Cu | 13.4 | 5.3 |
| ppmw Ni | 77 | 22 |
| ppmw Mn | 132 | 23 |
| ppmw Cr | 197 | 38 |
| ppmw V | 65 | <10 |
| ppmw Ba | 46 | 16 |
| ppmw Ti | 908 | 197 |
| ppmw Sb | <10 | <10 |
| ppmw Sn | 686 | 218 |

By comparing the analysis of the reactor residue set out in Table 3 with the chemical analysis of the magnetic and the non-magnetic fractions set out in Table 4, it can be seen that most of the iron and a major part of the aluminum in the reactor residue have been transferred to the magnetic fraction. Both the iron and the aluminum content in the non-magnetic fraction are at the same level as what would be expected in the original silicon particles used in the organochlorosilane reactor. Also the content of most of the trace elements are much lower in the non-magnetic fraction than in the magnetic fraction. The non-magnetic fraction thus has a composition which makes it a very suitable silicon source for recycling to the organochlorosilane reactor.

## Claims

1. Method for removing impurities from elemental silicon-containing residues from the processes of producing organochlorosilane and chlorosilane, **characterized in that** the residues are subjected to magnetic separation to provide a relative pure non-magnetic fraction having an increased silicon content and a relatively impure magnetic fraction having a lower silicon content than the non-magnetic fraction.

2. Method according to claim 1, **characterized in that** the magnetic separation is carried out using a high intensity, high gradient magnetic separation apparatus.

3. Method according to claim 2, **characterized in that** the magnetic separation is carried out using a moving belt conveyor having a magnet at its head pulley.

4. Method according to claim 1, **characterized in that** the magnetic separation is carried out in a non-oxidizing atmosphere.

5. Method according to claim 4, **characterized in that** the magnetic separation is carried out in an inert atmosphere.

6. Method according to claim 1, **characterized in that** the non-magnetic fraction is recycled to a reactor for producing organochlorosilanes.

7. Method according to claim 1, **characterized in that** the non-magnetic fraction is recycled to a reactor for producing chlorosilanes.

## Patentansprüche

1. Verfahren zum Entfernen von Verunreinigungen aus elementares Silizium enthaltenden Rückständen aus den Prozessen der Herstellung von Organochlorsilanen und Chlorsilanen, **dadurch gekennzeichnet, dass** die Rückstände einer magnetischen Trennung unterzogen werden, um eine relativ reine nicht-magnetische Fraktion mit einem erhöhten Siliziumgehalt und eine relativ unreine magnetische Fraktion mit einem im Vergleich zur nicht-magnetischen Fraktion verringerten Siliziumgehalt bereitzustellen.

2. Verfahren gemäß Anspruch 1, **dadurch gekennzeichnet, dass** die magnetische Trennung mittels einer magnetischen Trennvorrichtung von hoher Intensität und hohem Gradienten durchgeführt wird.

3. Verfahren gemäß Anspruch 2, **dadurch gekennzeichnet, dass** die magnetische Trennung mittels eines bewegten Förderbands durchgeführt wird, das einen Magneten als Kopfantriebsrolle hat.

4. Verfahren gemäß Anspruch 1, **dadurch gekennzeichnet, dass** die magnetische Trennung in einer nicht-oxidierenden Atmosphäre durchgeführt wird.

5. Verfahren gemäß Anspruch 4, **dadurch gekennzeichnet, dass** die magnetische Trennung in einer inerten Atmosphäre durchgeführt wird.

6. Verfahren gemäß Anspruch 1, **dadurch gekennzeichnet, dass** die nicht-magnetische Fraktion in einem Reaktor zur Herstellung von Organochlorsilanen wiederverwertet wird.

7. Verfahren gemäß Anspruch 1, **dadurch gekennzeichnet, dass** die nicht-magnetische Fraktion in einem Reaktor zur Herstellung von Chlorsilanen wiederverwertet wird.

## Revendications

1. Procédé pour éliminer des impuretés dans des résidus contenant du silicium élémentaire provenant de procédés de production d'organochlorosilanes et de chlorosilanes,
**caractérisé en ce que**
les résidus sont soumis à une séparation magnétique pour obtenir une fraction non-magnétique relativement pure ayant une teneur augmentée en silicium et une fraction magnétique relativement impure ayant une teneur en silicium inférieure à celle de la fraction non-magnétique.

2. Procédé conforme à la revendication 1,
**caractérisé en ce que**
la séparation magnétique est mise en oeuvre en utilisant un appareil de séparation à intensité élevée et gradient magnétique élevé.

3. Procédé conforme à la revendication 2,
**caractérisé en ce que**
la séparation magnétique est mise en oeuvre en utilisant un convoyeur à bande mobile équipé d'un aimant au niveau de sa poulie de tête.

4. Procédé conforme à la revendication 1,
**caractérisé en ce que**
la séparation magnétique est mise en oeuvre dans une atmosphère non-oxydante.

5. Procédé conforme à la revendication 4,
**caractérisé en ce que**
la séparation magnétique est mise en oeuvre dans une atmosphère inerte.

6. Procédé conforme à la revendication 1,
**caractérisé en ce que**
la fraction non-magnétique est recyclée vers un réacteur de production d'organochlorosilanes.

7. Procédé conforme à la revendication 1,
**caractérisé en ce que**
la fraction non-magnétique est recyclée vers un réacteur de production de chlorosilanes.
